# EUROPEAN PATENT APPLICATION

(11) **EP 4 626 084 A1**
(43) Date of publication of application: **01.10.2025**
(21) Application number: 23893885.6
(22) Date of filing: 22.11.2023
(51) Int. Cl.: H04W 52/02, H04W 24/08

(54) **TERMINAL MEASUREMENT METHOD, COMMUNICATION METHOD AND APPARATUS FOR TERMINAL MEASUREMENT, AND COMPUTER READABLE STORAGE MEDIUM**

(30) Priority: 25.11.2022 CN 202211491509
(71) Applicant: Spreadtrum Semiconductor (Nanjing) Co., Ltd., Nanjing, Jiangsu 211899 (CN)
(72) Inventor: LEI, Zhenzhu, Nanjing, Jiangsu 211899 (CN); ZHOU, Huayu, Nanjing, Jiangsu 211899 (CN)
(74) Representative: Bandpay & Greuter
(86) International application number: PCT/CN2023/133188
(87) International publication number: WO 2024/109797

(57) **Abstract**

A measurement method for a terminal, a communication method **and** apparatus for measurement at a terminal, **and** a computer-readable storage medium. The terminal includes a first receiver **and** a second receiver, **and** the first receiver is configured to receive a low-power wake-up signal. The measurement method for the terminal includes: receiving first information, where the first information is at least used to indicate configuration information of a first reference signal; receiving the first reference signal through the first receiver, to perform RRM measurement. The power-saving benefits of the terminal can be enhanced through the solution of the present disclosure.

## Description

The present application claims priority to Chinese Patent Application No. 202211491509.1, entitled "MEASUREMENT METHOD FOR TERMINAL, COMMUNICATION METHOD AND APPARATUS FOR MEASUREMENT AT TERMINAL, AND COMPUTER-READABLE STORAGE MEDIUM" and filed with the China National Intellectual Property Administration on November 25, 2022, which is hereby incorporated by reference in its entirety.

### TECHNICAL FIELD

The present invention relates to the field of communication technologies, more particularly, to a measurement method for a terminal, a communication method and apparatus for measurement at a terminal, and a computer-readable storage medium.

### BACKGROUND

In order to extend the battery life of terminals (also known as user equipment, User Equipment, UE for short), the 3rd Generation Partnership Project (3rd Generation Partnership Project, 3GPP) is currently discussing the content related to low-power wake-up signals.

When a terminal is in a deep sleep state, a network can wake up the terminal for related data transmission by sending a low-power wake-up signal. In other words, upon receiving the low-power wake-up signal, the terminal can determine whether it needs to exit the sleep state and enter an active state. The terminal receives the low-power wake-up signal through a dedicated receiver circuit since a main communication circuit (i.e., a main communication receiver) is in the deep sleep state and is incapable of receiving any signals.

However, as specified in existing protocols, the terminal's main communication receiver needs to be frequently awakened for radio resource management (Radio Resource Management, RRM for short) measurements to maintain its mobility. In this case, the terminal's main communication receiver cannot enter the deep sleep state. This is obviously not conducive to the power-saving benefits of terminals.

### SUMMARY

The technical problem solved by the present invention is how to improve the power-saving benefits of terminals.

To solve the technical problem mentioned above, an embodiment of the present invention provides a measurement method for a terminal. The terminal includes a first receiver and a second receiver, and the first receiver is configured to receive a low-power wake-up signal. The method includes: receiving first information, where the first information is at least used to indicate configuration information of a first reference signal; receiving the first reference signal through the first receiver, to perform RRM measurement.

Optionally, the first information includes configuration information of a second reference signal. The configuration information of the first reference signal is determined at least based on the configuration information of the second reference signal, and the second reference signal is received by the second receiver.

Optionally, configuration of at least part of parameters in the configuration information of the first reference signal remains consistent with configuration of a parameter corresponding to the at least part of parameters in the configuration information of the second reference signal.

Optionally, for a first parameter that is inconsistently configured between the configuration information of the first reference signal and the configuration information of the second reference signal, determining, based on a preset offset value, an offset of a value of the first parameter in the configuration information of the first reference signal relative to a value of the first parameter in the configuration information of the second reference signal.

Optionally, the first information further includes an offset value, which is used to indicate an offset of a value of a first parameter in the configuration information of the first reference signal relative to a value of the first parameter in the configuration information of the second reference signal.

Optionally, the first parameter includes a starting time position.

Optionally, the determination of the configuration information of the first reference signal at least based on the configuration information of the second reference signal includes: determining the configuration information of the first reference signal based on the configuration information of the second reference signal and the offset value.

Optionally, the first information includes the configuration information of the first reference signal and configuration information of a second reference signal. The second reference signal is received by the second receiver.

Optionally, at least during a reception period of the first reference signal by the first receiver, the second receiver is in a non-operating state.

Optionally, the configuration information of the first reference signal is at least selected from: a time-frequency resource location of the first reference signal, a period of the first reference signal, a starting time position of the first reference signal, a period of a reception window of the first reference signal, a starting position of the reception window of the first reference signal, and a length of the reception window of the first reference signal.

Optionally, the first information includes SMTC.

Optionally, the method further includes: receiving indication information. The indication information is used to indicate whether the RRM measurement through the first receiver is permitted or not.

Optionally, the indication information is carried by system information, and the system information is received by the second receiver; or the indication information is carried by the low-power wake-up signal.

Optionally, the method further includes: if signal quality of a serving cell is less than a first preset threshold, waking up the second receiver to perform serving cell measurement. The signal quality of the serving cell is obtained by measuring the first reference signal through the first receiver.

Optionally, the method further includes: if signal quality of a serving cell is less than a second preset threshold, waking up the second receiver to perform neighbor cell measurement. The signal quality of the serving cell is obtained by measuring the first reference signal through the first receiver.

To solve the technical problem mentioned above, an embodiment of the present invention further provides a measurement apparatus for a terminal. The terminal includes a first receiver and a second receiver, and the first receiver is configured to receive a low-power wake-up signal. The apparatus includes: a first receiving module, configured to receive first information, where the first information is at least used to indicate configuration information of a first reference signal; a second receiving module, configured to receive the first reference signal through the first receiver, to perform RRM measurement.

To solve the technical problem mentioned above, an embodiment of the present invention further provides a communication method for measurement at a terminal. The terminal includes a first receiver and a second receiver, and the first receiver is configured to receive a low-power wake-up signal. The method includes: transmitting first information, where the first information is at least used to indicate configuration information of a first reference signal, and the first reference signal is received by the first receiver to perform RRM measurement; transmitting the first reference signal.

Optionally, the first information includes configuration information of a second reference signal. The configuration information of the first reference signal is determined at least based on the configuration information of the second reference signal, and the second reference signal is received by the second receiver.

Optionally, configuration of at least part of parameters in the configuration information of the first reference signal remains consistent with configuration of a parameter corresponding to the at least part of parameters in the configuration information of the second reference signal.

Optionally, for a first parameter that is inconsistently configured between the configuration information of the first reference signal and the configuration information of the second reference signal, determining, based on a preset offset value, an offset of a value of the first parameter in the configuration information of the first reference signal relative to a value of the first parameter in the configuration information of the second reference signal.

Optionally, the first information further includes an offset value, which is used to indicate an offset of a value of a first parameter in the configuration information of the first reference signal relative to a value of the first parameter in the configuration information of the second reference signal.

Optionally, the first parameter includes a starting time position.

Optionally, the determination of the configuration information of the first reference signal at least based on the configuration information of the second reference signal includes: determining the configuration information of the first reference signal based on the configuration information of the second reference signal and the offset value.

Optionally, the first information includes the configuration information of the first reference signal and configuration information of a second reference signal. The second reference signal is received by the second receiver.

Optionally, the configuration information of the first reference signal is at least selected from: a time-frequency resource location of the first reference signal, a period of the first reference signal, a starting time position of the first reference signal, a period of a reception window of the first reference signal, a starting position of the reception window of the first reference signal, and a length of the reception window of the first reference signal.

Optionally, the first information includes SMTC.

Optionally, the method further includes: transmitting indication information. The indication information is used to indicate whether the RRM measurement through the first receiver is permitted or not.

Optionally, the indication information is carried by system information, and the system information is received by the second receiver; or the indication information is carried by the low-power wake-up signal.

Optionally, the method further includes: transmitting a second reference signal. The second receiver is awakened based on an RRM measurement result from the first receiver to receive the second reference signal.

To solve the technical problem mentioned above, an embodiment of the present invention further provides a communication apparatus for measurement at a terminal. The terminal includes a first receiver and a second receiver, and the first receiver is configured to receive a low-power wake-up signal. The apparatus includes: a first transmitting module, configured to transmit first information, where the first information is at least used to indicate configuration information of a first reference signal, and the first reference signal is received by the first receiver to perform RRM measurement; a second transmitting module, configured to transmit the first reference signal.

To solve the above technical problems, an embodiment of the present invention further provides a computer-readable storage medium. The computer-readable storage medium is a non-volatile storage medium or a non-transitory storage medium with a computer program stored thereon. When the computer program is executed by a processor, steps of the methods mentioned above are performed.

To solve the above technical problems, an embodiment of the present invention further provides a measurement apparatus for a terminal, which includes a memory and a processor. The memory stores thereon a computer program executable on the processor. When the computer program runs on the processor, steps of the method mentioned above are executed.

To solve the above technical problems, an embodiment of the present invention further provides a communication apparatus for measurement at a terminal, which includes a memory and a processor. The memory stores thereon a computer program executable on the processor. When the computer program runs on the processor, steps of the method mentioned above are executed.

Compared with the prior art, the technical solution of the embodiments of the present invention has the beneficial effects as follows.

At the terminal side, an embodiment of the present invention provides a measurement method for a terminal. The terminal includes a first receiver and a second receiver, and the first receiver is configured to receive a low-power wake-up signal. The method includes: receiving first information, where the first information is at least used to indicate configuration information of a first reference signal; receiving the first reference signal through the first receiver, to perform RRM measurement.

Compared to the limited power-saving benefits of terminals in the prior art due to the frequent awakening of the second receiver for RRM measurements, in this implementation, the RRM measurement activities of the second receiver can be reduced or the second receiver can even be permitted not to perform the RRM measurement activities. This allows the second receiver to enter the deep sleep state, thereby significantly enhancing power-saving benefits of the terminal. Specifically, the terminal uses the first receiver, which is independent of the second receiver, to perform RRM measurement(s). This allows the second receiver to be excluded from participation in the RRM measurement activities. When there is no data transmission, the second receiver can enter the deep sleep state, thereby achieving the purpose of power-saving of the terminal.

Furthermore, since frequent awakening for RRM measurements is no longer required, the second receiver can enter either a deep sleep state or a shutdown state, thereby further enhancing the power-saving performance of the terminal.

At the network side, an embodiment of the present invention further provides a communication method for measurement at a terminal. The terminal includes a first receiver and a second receiver, and the first receiver is configured to receive a low-power wake-up signal. The method includes: transmitting first information, where the first information is at least used to indicate configuration information of a first reference signal, the first reference signal is received by the first receiver to perform RRM measurement; transmitting the first reference signal.

Compared to the frequent awakening of the second receiver for RRM measurements in the prior art due to the transmission of only reference signals for the second receiver, the network device in this implementation transmits the first reference signal for reception by the first receiver, enabling the terminal to perform RRM measurement activities through the first receiver. Since the second receiver is not required to participate in the RRM measurement activities, it can enter a deep sleep state or a shutdown state, thereby improving the power-saving benefits of terminals.

### BRIEF DESCRIPTION OF DRAWINGS

FIG. 1 is a flowchart of a measurement method for a terminal according to an embodiment of the present invention.
FIG. 2 is a schematic diagram of a first configuration of a first reference signal according to an embodiment of the present invention.
FIG. 3 is a schematic diagram of a second configuration of a first reference signal according to an embodiment of the present invention.
FIG. 4 is a schematic structural diagram of a measurement apparatus for a terminal according to an embodiment of the present invention.
FIG. 5 is a flowchart of a communication method for measurement at a terminal according to an embodiment of the present invention.
FIG. 6 is a schematic structural diagram of a communication apparatus for measurement at a terminal according to an embodiment of the present invention.
FIG. 7 is a signaling interaction diagram for a typical application scenario according to an embodiment of the present invention.

### DESCRIPTION OF EMBODIMENTS

As discussed in the BACKGROUND part, although the existing terminal implementations have introduced the low-power wake-up signal mechanism to improve the power-saving benefits of the terminal, the terminal's main communication receiver still needs to be frequently awakened to perform RRM measurements. This ultimately limits any substantial improvement in power-saving benefits.

Specifically, when the terminal is in a shutdown state or flight mode, a network can wake up the terminal for related data transmission by sending a low-power wake-up signal. That is, upon receiving the low-power wake-up signal, the terminal determines whether it needs to be powered up, or exit the flight mode and enter the activate state.

However, based on the current RRM measurement requirements in the idle/inactive state, the main communication receiver at the terminal side needs to frequently perform serving cell measurements (one measurement per DRX (Discontinuous Reception, Discontinuous Reception) cycle) and/or neighbor cell measurements. Therefore, even with the introduction of the low-power wake-up signal, the main receiver of the terminal still cannot enter the deep sleep state or the shutdown state. As a result, the power-saving benefits of the terminal enabled by the low-power wake-up signal cannot be achieved.

To solve the technical problem mentioned above, an embodiment of the present invention provides a measurement method for a terminal. The terminal includes a first receiver and a second receiver, and the first receiver is configured to receive a low-power wake-up signal. The method includes: receiving first information, where the first information is at least used to indicate configuration information of a first reference signal; receiving the first reference signal through the first receiver, to perform RRM measurement(s).

By adopting this implementation, the RRM measurement activities of the second receiver can be reduced at the terminal side, or the second receiver can even be permitted not to perform the RRM measurement activities. This allows the second receiver to enter the deep sleep state, thereby significantly enhancing power-saving benefits of the terminal. Specifically, the terminal uses the first receiver, which is independent of the second receiver, to perform RRM measurement(s). This allows the second receiver to be excluded from participation in the RRM measurement activities. When there is no data transmission, the second receiver can enter the deep sleep state, thereby achieving the purpose of power-saving of the terminal.

In order to make the above-mentioned objects, features, and beneficial effects of the present invention more apparent and understandable, specific embodiments of the present invention are described in detail below with reference to the accompanying drawings.

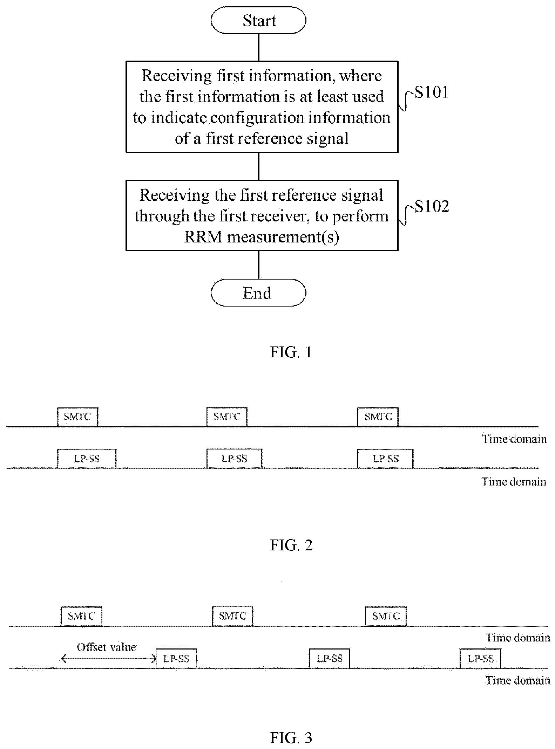

FIG. 1 is a flowchart of a measurement method for a terminal according to an embodiment of the present invention.

This implementation is applicable to terminal synchronization/RRM measurement application scenarios. By executing this implementation, the terminal can perform synchronization/RRM measurement activities with higher power-saving benefits.

This implementation may be performed by a terminal. The terminal includes a first receiver and a second receiver. Specifically, the second receiver may be, for example, a main communication receiver of the terminal, that is, a receiver mainly responsible for communication between the terminal and the network device and/or other terminals. Further, the first receiver may be a receiver different from the second receiver. For example, the first receiver may serve as an auxiliary receiver during communication between the terminal and the network device and/or other terminals.

In some embodiments, the first receiver and the second receiver may differ in performance, software and hardware configuration, etc. For example, the reception accuracy of the first receiver may be lower than that of the second receiver.

In some embodiments, the first receiver may be, for example, a low-power wake-up receiver (low-power wake-up receiver, LP-WUR for short) configured to receive a low-power wake-up signal (low-power wake-up signal, LP-WUS for short).

The low-power wake-up signal may be used to wake up the second receiver. In response to receiving the low-power wake-up signal, the first receiver may directly or indirectly wake up the second receiver, to enable the second receiver to switch from the (deep) sleep state or the shutdown state to the operating state. The second receiver in the operating state is capable of receiving data. The data may originate from a network device or other terminals.

In some embodiments, the first receiver and the second receiver may be two independent modules of the terminal. If the first receiver is in the operating state, the second receiver may be in the deep sleep or shutdown state, and vice versa. Alternatively, the first receiver and the second receiver may be in the operating state simultaneously.

In a specific implementation, a measurement method for a terminal provided in the following steps S101 to S102 may be executed by a chip with an RRM measurement capability in a terminal, or may be executed by a baseband chip in a terminal.

Specifically, with reference to FIG. 1, the measurement method for the terminal described in this embodiment may include the following steps:
step S101, receiving first information, where the first information is at least used to indicate configuration information of a first reference signal;
step S102, receiving the first reference signal through the first receiver, to perform RRM measurement(s).

Further, the second receiver is in a non-operating state at least during the execution of step S 102 for receiving the first reference signal through the first receiver. The non-operating state may be, for example, a sleep state, a shutdown state, an inactive state, an idle state, etc.

Further, the first reference signal may be, for example, a primary synchronization signal (Primary Synchronization Signal, PSS for short), a secondary synchronization signal (Secondary Synchronization Signal, S-SSS for short), or other reference signals for RRM measurement(s). In some embodiments, the first reference signal may also be referred to as a low-power reference signal (LP-SS).

The configuration information of the first reference signal may include time domain information of the first reference signal and frequency domain information of the first reference signal. For example, the configuration information of the first reference signal may be at least selected from: a time-frequency resource location of the first reference signal, a period of the first reference signal, a starting time position of the first reference signal, a period of a reception window of the first reference signal, a starting position of the reception window of the first reference signal, and a length of the reception window of the first reference signal.

In a specific implementation, the first information may be dedicated signaling, which is dedicated to indicating the configuration information of the first reference signal. Specifically, the dedicated signaling may be, for example, a message different from SMTC (SSB-based Measurement Timing Configuration, SSB Measurement Timing Configuration). SMTC is used to configure configuration information of a second reference signal for reception by the second receiver.

For example, a time domain position of the first information may be different from that of the SMTC. Thus, a network device can flexibly send corresponding configuration information to a specific receiver when this receiver is required to perform RRM measurement(s).

In some embodiments, the second reference signal and the first reference signal may be the same reference signal, partially identical reference signals, or completely different reference signals. The wording "same", "partially identical", and "completely different" herein may be characterized in various aspects, such as the type of reference signal, the generated sequence for the reference signal, the time domain position of the reference signal, and/or the frequency domain position of the reference signal.

In a specific implementation, the first information may be used to simultaneously configure both the configuration information of the first reference signal and the configuration information of the second reference signal. For example, the first information may include SMTC. In this implementation, the SMTC, which is designed for configuring the second reference signal for the second receiver to perform serving cell/neighbor cell measurements in the prior art, is enhanced to also configure the first reference signal for the first receiver to perform serving cell/neighbor cell measurements. This enables the terminal that receives the SMTC generated by this implementation to simultaneously obtain the configuration information of the first reference signal and the configuration information of the second reference signal.

In a specific implementation, the first information may include the configuration information of the second reference signal. It is possible to determine the configuration information of the first reference signal at least based on the configuration information of the second reference signal. That is to say, in this specific implementation, the first reference signal and the second reference signal are associated in configuration, and thus the first information may simply include the configuration information of the second reference signal, or the first information may include the configuration information of the second reference signal and the configuration of the first reference signal that distinguishes it from the second reference signal, to save signaling overhead.

Specifically, configuration of at least part of parameters in the configuration information of the first reference signal may remain consistent with configuration of corresponding parameter(s) in the configuration information of the second reference signal.

For example, a starting position of a measurement occasion of the first reference signal (i.e., the starting time position) may remain consistent with a starting position of SMTC (i.e., a starting time position of the second reference signal).

For another example, it is possible to configure a time length of the measurement occasion of the first reference signal (i.e., the length of the reception window) to remain consistent with a time length of the SMTC (i.e., a length of a reception window of the second reference signal).

Further, for a first parameter that is inconsistently configured between the configuration information of the first reference signal and the configuration information of the second reference signal, the first information may further include the first parameter. For example, the length of the reception window of the first reference signal may be inconsistent with the length of the reception window of the SMTC, and the first information may include the configuration information of the second reference signal and a time length value of the measurement occasion of the first reference signal.

In response to receiving the first information, the terminal may determine the starting position of the measurement occasion of the first reference signal directly based on the starting position of the SMTC, as shown in FIG. 2. Then, when executing step S102, the terminal may determine, based on the measurement occasion of the first reference signal, a time position at which the first receiver performs the RRM measurement(s). In FIG. 2, the starting time position of the first reference signal (labeled as LP-SS in the figure) remains consistent with the starting time position of the second reference signal (labeled as SMTC in the figure), but the length of the reception window of the first reference signal is different from the length of the reception window of the second reference signal.

In a specific implementation, for the first parameter that is inconsistently configured between the configuration information of the first reference signal and the configuration information of the second reference signal, it is possible to determine an offset of a value of the first parameter in the configuration information of the first reference signal relative to a value of the first parameter in the configuration information of the second reference signal based on a preset offset value.

Correspondingly, after receiving the first information, the terminal may determine the configuration information of the first reference signal based on the configuration information of the second reference signal and the offset value.

Specifically, the network side may preconfigure the terminal with the preset offset value. Alternatively, it is also possible to predefine the preset offset value.

In some embodiments, the first information may include the configuration information of the second reference signal and an enable field of the first parameter.

If the enable field of the first parameter is 0, it indicates that the configuration of the first reference signal and the configuration of the second reference signal are consistent for the first parameter. Correspondingly, the terminal may directly determine the configuration information of the second reference signal as the configuration information of the first reference signal.

If the enable field of the first parameter is 0, it indicates that the configuration of the first reference signal and the configuration of the second reference signal are inconsistent for the first parameter. Correspondingly, the terminal may determine a result of adding a specific value of the first parameter in the first information to the preset offset value as a specific value of the first parameter in the first reference signal.

The first parameter may be, e.g., a starting time position.

In a specific implementation, the first information may further include an offset value. The offset value is used to indicate an offset of a value of the first parameter in the configuration information of the first reference signal relative to a value of the first parameter in the configuration information of the second reference signal. That is to say, in the specific implementation, for the first parameter that is inconsistently configured between the configuration information of the first reference signal and the configuration information of the second reference signal, the network side may directly inform the terminal of the specific offset value through the first information.

The first parameter may include a starting time position.

In some embodiments, there may be a time offset (offset) between the starting position of the measurement occasion of the first reference signal and the starting position of the SMTC. This offset is the offset value of the first parameter. It is possible to carry this offset in the first information and instruct it to the terminal.

Furthermore, the time length of the measurement occasion of the first reference signal may be consistent with the time length of the SMTC. Correspondingly, the parameter for the length of the reception window in the first information may simply include a specific value of the length of the reception window of the second reference signal.

In response to receiving the first information, the terminal may determine the configuration information of the first reference signal based on the offset value and the configuration information of the second reference signal in the first information.

For example, in response to receiving the first information, the terminal may determine the starting position of the measurement occasion of the first reference signal directly based on the starting position of the SMTC and the offset value, as shown in FIG. 3. Then, when executing step S102, the terminal may determine, based on the measurement occasion of the first reference signal, the time position at which the first receiver performs the RRM measurement(s). In FIG. 3, the starting time position of the first reference signal (labeled as LP-SS in the figure) is shifted by the offset value from the starting time position of the second reference signal (labeled as SMTC in the figure), and the length of the reception window of the first reference signal remains consistent with the length of the reception window of the second reference signal.

In some embodiments, the first information may include both the offset value and different configurations of the same parameter. For example, the first information may include the SMTC, the offset value of the starting time position (i.e., time offset) of the first reference signal relative to the starting time position of the SMTC, and a time length value of the measurement occasion of the first reference signal.

In a specific implementation, the first information may include the configuration information of the first reference signal and the configuration information of the second reference signal. That is to say, in this specific implementation, the network side directly configures two sets of reference signals for the terminal through the first information. The reference signals are used for the first receiver and the second receiver of the terminal to perform RRM measurements respectively. Furthermore, in the configuration information of the first reference signal and the configuration information of the second reference signal, specific values configured for the same parameter may be the same or different. For example, the first information may indicate, through two sets of configuration information, the first reference signal and the second reference signal that have the same starting time position and the same length of reception window. For another example, the first information may indicate, through two sets of configuration information, the first reference signal and the second reference signal that have the same starting time position and different lengths of reception window.

In a specific implementation, before/after/while performing step S101, the measurement method for the terminal described in this embodiment may further include a step of receiving indication information. The indication information is used to indicate whether the RRM measurement(s) through the first receiver is permitted or not.

Specifically, the network side may send the indication information to the terminal.

In some embodiments, it is possible to carry the indication information in system information. For example, the network may carry the indication information through a system information block (System Information Block, SIB for short) (for example, by adding 1 bit as the indication information in the SIB), to inform the terminal whether it is permitted to use the first receiver for measuring the first reference signal to perform RRM measurement(s) of the serving cell and/or neighbor cell.

Accordingly, upon receiving the SIB, the terminal may determine whether it is permitted to use the first receiver for measuring the first reference signal to perform RRM measurement(s) of the serving cell and/or neighbor cell.

Further, the second receiver may receive the system information. For example, it is possible to periodically awaken the second receiver in a non-operating state to receive the SIB. If the received SIB carries indication information, the second receiver sends the received indication information to the first receiver. The period for the second receiver to receive the SIB may be longer than the period for the second receiver to perform RRM measurement(s) as specified in existing protocols.

In some embodiments, when the indication information in the SIB indicates that the first receiver is permitted to receive the first reference signal for RRM measurement(s), the second receiver may communicate the indication information to the first receiver.

In a variation, it is possible to carry the indication information in the low-power wake-up signal. For example, the network may carry the indication information through the LP-WUS (e.g., by adding 1 bit in the LP-WUS or using the reserved 1 bit as the indication information), to inform the terminal whether it is permitted to use the first receiver for measuring the first reference signal to perform RRM measurement(s) of the serving cell and/or neighbor cell.

Accordingly, upon receiving the LP-WUS, the terminal may determine whether it is permitted to use the first receiver for measuring the first reference signal to perform RRM measurement(s) of the serving cell and/or neighbor cell.

Further, the first receiver may receive the LP-WUS, and thereby the first receiver may directly obtain the indication information to determine whether it is permitted to perform RRM measurement(s).

In some embodiments, it is possible to use the LP-WUS to awaken the second receiver for data reception. On this basis, in this embodiment, the LP-WUS additionally carries indication information to indicate whether the first receiver is allowed to receive the first reference signal for RRM measurement activities.

In some embodiments, the LP-WUS may be simply used to indicate whether RRM measurement(s) through the first receiver is permitted or not. That is, in response to receiving the LP-WUS, the first receiver may not wake up the second receiver, but may or may not perform the RRM measurement(s) based on the instruction of the indication information.

In a specific implementation, after step S102, the first receiver may obtain an RRM measurement result by receiving the first reference signal. Based on the RRM measurement result from the first receiver, it is possible to schedule the occasion for the first receiver to trigger the second receiver to perform serving cell and/or neighbor cell measurement(s).

Specifically, the RRM measurement result may include signal quality of a serving cell.

In some embodiments, after step S102, the measurement method for the terminal described in this implementation may further include the step of waking up the second receiver to perform serving cell measurement, if the signal quality of the serving cell is less than a first preset threshold.

For example, the network side may preset a first preset threshold for the first receiver to trigger the second receiver to perform serving cell measurement. The terminal determines, based on the result of the signal quality of the serving cell measured by the first receiver, whether to trigger the second receiver to perform the serving cell measurement. Specifically, the first receiver acquires the signal quality of the serving cell by measuring the first reference signal transmitted by a base station corresponding to the serving cell.

If the signal quality of the serving cell obtained by the terminal based on the measurement of the first receiver is less than a first preset threshold, the first receiver triggers the second receiver to wake up from a sleep state (or a shutdown state) to perform serving cell measurement.

In some embodiments, after step S102, the measurement method for the terminal described in this embodiment may further include the step of waking up the second receiver to perform neighbor cell (neighborhood for short) measurement, if the signal quality of the serving cell is less than a second preset threshold.

For example, the network side may preset the second preset threshold for the first receiver to trigger the second receiver to perform neighbor cell measurement. The terminal determines, based on a result of the signal quality of the serving cell measured by the first receiver, whether to trigger the second receiver to perform neighbor cell measurement. Specifically, the first receiver acquires the signal quality of the serving cell by measuring the first reference signal transmitted by a base station corresponding to the serving cell.

If the signal quality of the serving cell obtained by the terminal based on the measurement of the first receiver is less than the second preset threshold, the first receiver triggers the second receiver to wake up from a sleep state (or shutdown state) to perform neighbor cell measurement.

Furthermore, the awakened second receiver may receive the second reference signal to perform intra-frequency cell measurement, or perform inter-frequency cell measurement.

For example, the second preset threshold may further include a first value and a second value. If the signal quality of the serving cell obtained by the terminal based on the measurement of the first receiver is less than the first value, the first receiver triggers the second receiver to wake up from the sleep state (or shutdown state) to perform the intra-frequency cell measurement. If the signal quality of the serving cell obtained by the terminal based on the measurement of the first receiver is less than the second value, the first receiver triggers the second receiver to wake up from the sleep state (or shutdown state) to perform the inter-frequency cell measurement.

In some embodiments, the network may configure both the first preset threshold and the second preset threshold through high-layer signaling. The specific values of the first preset threshold, the second preset threshold, the first value, and the second value may be set and adjusted as needed in practical applications.

In some embodiments, the signal quality of the serving cell may be characterized based on a reference signal received power (Reference Signal Received Power, RSRP for short) or a reference signal received quality (Reference Signal Received Quality, RSRQ for short).

Furthermore, the RRM measurement result may further include signal quality of a neighbor cell.

As described above, by adopting this implementation, the RRM measurement activities of the second receiver can be reduced at the terminal side, or the second receiver can even be permitted not to perform the RRM measurement activities, thereby significantly enhancing the power-saving benefits of the terminal. Specifically, the terminal uses the first receiver, which is independent of the second receiver, to perform RRM measurement(s). This allows the second receiver to be excluded from participation in the RRM measurement activities.

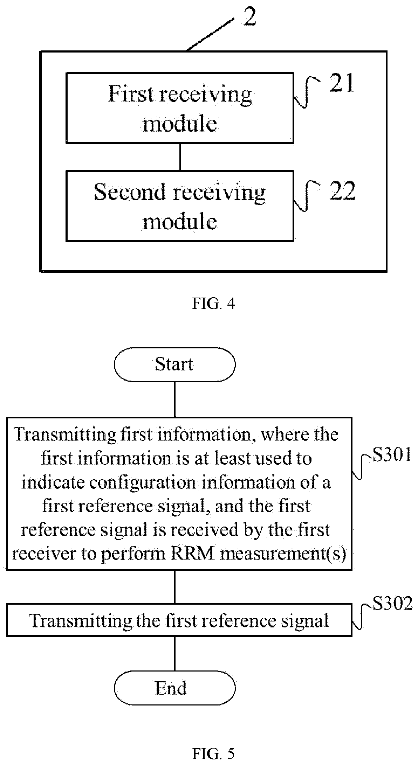

FIG. 4 is a schematic structural diagram of a measurement apparatus 2 for a terminal according to an embodiment of the present invention. Those skilled in the art should understand that the measurement apparatus 2 for the terminal described in this embodiment may be configured to implement the methods and technical solutions detailed in the embodiments described in FIGS. 1 to 3 above.

Specifically, the terminal may include a first receiver and a second receiver. The first receiver is configured to receive a low-power wake-up signal.

Further, referring to FIG. 4, the measurement apparatus 2 for the terminal described in this embodiment may include: a first receiving module 21, configured to receive first information, where the first information is at least used to indicate configuration information of a first reference signal; a second receiving module 22, configured to receive the first reference signal through the first receiver to perform RRM measurement(s).

For more details about the working principle and working mode of the measurement apparatus 2 for the terminal, reference may be made to the relevant descriptions in FIG. 1 to FIG. 3 above, which will not be repeated here.

In a specific implementation, the measurement apparatus 2 for the terminal may correspond to a chip with an RRM measurement capability in the terminal, or a chip with a data processing capability in the terminal, such as a system-on-a-chip (System-On-a-Chip, SOC for short), a baseband chip, etc. Alternatively, the measurement apparatus 2 for the terminal may correspond to a chip module including chip(s) with an RRM measurement capability in the terminal, or a chip module including chip(s) with a data processing capability in the terminal, or a terminal.

FIG. 5 is a flowchart of a communication method for measurement at a terminal according to an embodiment of the present invention.

This implementation may be applied to terminal synchronization/RRM measurement application scenarios. By executing this implementation, the network side can configure a suitable reference signal for the terminal, to enable the terminal to perform synchronization/RRM measurement activities with higher power-saving benefits.

This implementation may be executed by the network side, such as a network device at the network side. The network device may be, for example, a base station. The peer with which the network device communicates using this implementation may be, for example, the terminal described in the embodiments illustrated in FIG. 1 to FIG. 3 above.

In a specific implementation, the communication method for measurement at a terminal provided by the following steps S301 to S302 may be executed by a chip with an RRM measurement capability in a network device, or may be executed by a baseband chip in the network device.

Specifically, with reference to FIG. 5, the communication method for measurement at a terminal described in this embodiment may include the following steps:
step S301: transmitting first information, where the first information is at least used to indicate configuration information of a first reference signal, and the first reference signal is received by the first receiver to perform RRM measurement(s);
step S302: transmitting the first reference signal.

Those skilled in the art will understand that the steps S301 to S302 may be regarded as execution steps corresponding to the steps S101 to S102 described in the embodiment illustrated in FIG. 1. The two sets of steps are complementary to each other in terms of specific implementation principles and logic. Therefore, for the interpretation of terms involved in this embodiment, reference may be made to the relevant descriptions in the embodiment illustrated in FIG. 1, which will not be repeated here.

In a specific implementation, before/while/after performing step S301, the method described in this embodiment may further include a step of transmitting indication information. The indication information is used to indicate whether the RRM measurement(s) through the first receiver is permitted or not.

Further, if the indication information indicates that the terminal is permitted to perform the RRM measurement(s) through the first receiver, the network device executes step S302 to transmit the first reference signal.

In a specific implementation, before/after/while performing step S302, the network device may additionally transmit a second reference signal. Correspondingly, if the indication information indicates that the terminal is not permitted to perform RRM measurement(s) through the first receiver, and/or if the terminal triggers, based on signal quality of a serving cell obtained through measurement of the first receiver, the second receiver to switch to an operating state, the terminal may receive the second reference signal through the second receiver to perform RRM measurement(s) with higher accuracy.

As described above, by adopting this implementation, the network device transmits the first reference signal for reception by the first receiver, enabling the terminal to perform the RRM measurement activities through the first receiver. Since the second receiver is not required to participate in the RRM measurement activities, it can enter a deep sleep state or a shutdown state, thereby improving the power-saving benefits of terminals.

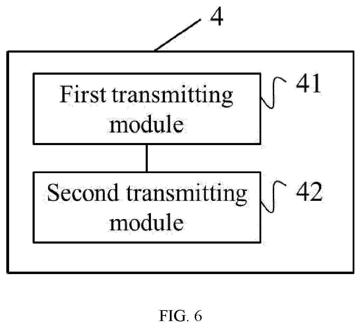

FIG. 6 is a schematic structural diagram of a communication apparatus 4 for measurement at a terminal according to an embodiment of the present invention. Those skilled in the art should understand that the communication apparatus 4 for measurement at the terminal described in this embodiment may be configured to implement the methods and technical solutions described in the embodiments illustrated in FIG. 5 above.

Specifically, the terminal may include a first receiver and a second receiver. The first receiver is configured to receive a low-power wake-up signal.

Further, the communication apparatus 4 for measurement at the terminal described in this embodiment may include: a first transmitting module 41, configured to transmit first information, where the first information is at least used to indicate configuration information of a first reference signal, and the first reference signal is received by the first receiver to perform RRM measurement(s); a second transmitting module 42, configured to transmit the first reference signal.

For more details about the working principle and working mode of the communication apparatus 4 for measurement at the terminal, reference may be made to the relevant descriptions in FIG. 5 above, which will not be repeated here.

In a specific implementation, the communication apparatus 4 for measurement at the terminal may correspond to a chip with an RRM measurement capability in the network device, or a chip with a data processing capability in the network device, such as a system-on-a-chip (System-On-a-Chip, SOC for short), a baseband chip, etc. Alternatively, the measurement apparatus 4 for measurement at the terminal may correspond to a chip module including chip(s) with an RRM measurement capability in the network device, or a chip module including chip(s) with a data processing capability in the network device, or the network device.

In a specific implementation, each module/unit included in each apparatus or product described in the above embodiments may be a software module/unit or a hardware module/unit, or may be partly a software module/unit and partly a hardware module/unit.

For example, for apparatus(s) or product(s) applied to or integrated into a chip, all modules/units included therein may be implemented through hardware such as circuit(s), or at least part of modules/units may be implemented through software program(s) running on processor(s) integrated within the chip, while the remaining modules/units (if any) may be implemented through hardware such as circuit(s). For apparatus(s) or product(s) applied to or integrated within a chip module, all modules/units included therein may be implemented through hardware such as circuits, where different modules/units may reside on either the same component (e.g., a chip, circuit module, etc.) or different components of the chip module; alternatively, at least part of the modules/units may be implemented via software program(s) running on processor(s) integrated within the chip module, while any remaining modules/units (if any) may be implemented through hardware such as circuit(s). For apparatus(s) or product(s) applied to or integrated within a terminal, all modules/units included therein may be implemented through hardware such as circuits, where different modules/units may reside within either the same component (e.g., a chip, circuit module, etc.) or different components of the terminal; alternatively, at least part of the modules/units may be implemented via software program(s) running on processor(s) integrated within the terminal, while any remaining modules/units (if any) may be implemented through hardware such as circuit(s).

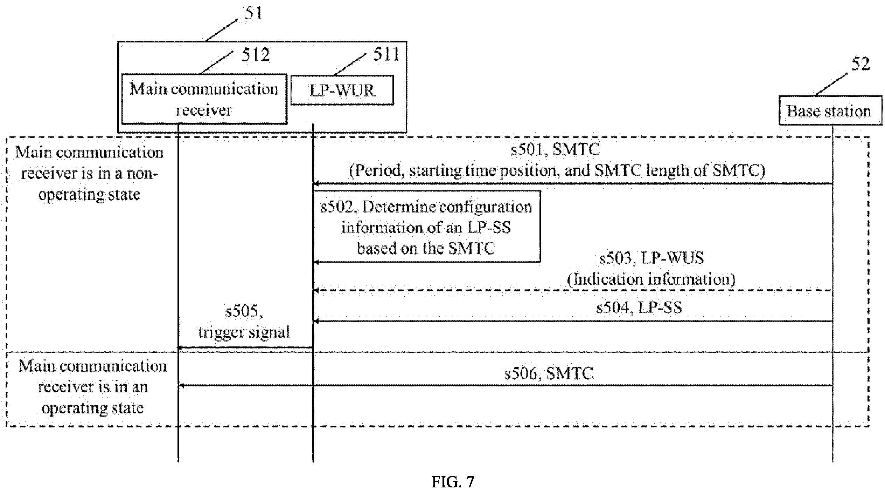

In a typical application scenario, referring to FIG. 7, a base station 52 corresponding to a serving cell where a terminal 51 is currently located may perform operation s501 to transmit SMTC to the terminal 51 through high-layer signaling. The SMTC may specifically include a period, a starting time position, and an SMTC length of the SMTC. A first receiver (e.g., the LP-WUR 511) of the terminal 51 or a second receiver (e.g., a main communication receiver 512) of the terminal 51 may receive the SMTC.

In response to receiving the SMTC, the LP-WUR 511 may perform an operation s502, to determine configuration information of an LP-SS based on the SMTC. For example, the LP-WUR 511 may determine, based on the configuration of the SMTC, the measurement occasion of the LP-SS for synchronization/RRM measurement(s). The measurement occasion of the LP-SS may remain consistent with the configuration of the SMTC or there may be a time offset therebetween.

Further, the base station 52 may perform an operation s503 to transmit an LP-WUS. The LP-WUS includes indication information, and the indication information indicates that the terminal 51 is permitted to perform RRM measurement(s) through the LP-WUR 511.

In response to receiving the LP-WUS that permits the RRM measurement(s) by the LP-WUR 511, the LP-WUR 511 of the terminal 51 performs an operation s504, to perform serving cell and/or neighbor cell measurement(s) at the measurement occasion determined in the operation s502. Accordingly, the base station 52 transmits the LP-SS for the LP-WUR 511 to measure. During this period, the main communication receiver 512 is in a non-operating state.

Further, when executing the operation s501, the base station 52 may also transmit a first preset threshold and/or a second preset threshold through high-layer signaling, to establish a mechanism in which the LP-WUR 511 triggers the main communication receiver 512 to perform RRM measurement(s).

For example, as the LP-WUR 511 performs the operation s504, it can obtain the signal quality of the serving cell. If the signal quality of the serving cell determined by the LP-WUR 511 is less than the first preset threshold, the LP-WUR 511 may perform an operation s505, to transmit a trigger signal to trigger the main communication receiver 512 to perform serving cell measurement.

In response to receiving the trigger signal, the main communication receiver 512 switches from the non-operating state to the operating state, and executes an operation s506, to perform RRM measurement(s) on the serving cell. Accordingly, the base station 52 transmits the SMTC for the main communication receiver 512 to measure.

For another example, as the LP-WUR 511 performs the operation s504, it can obtain the signal quality of the serving cell. If the signal quality of the serving cell determined by the LP-WUR 511 is less than a second preset threshold, the trigger signal transmitted by the LP-WUR 511 when performing the operation s506 may be used to trigger the main communication receiver 512 to perform neighbor cell measurement.

In response to receiving the trigger signal, the main communication receiver 512 switches from the non-operating state to the operating state, and executes the operation s506, to perform RRM measurement(s) on the neighbor cell. Accordingly, the base station 52 transmits the SMTC for the main communication receiver 512 to measure.

In a variation, the SMTC in the operation s501 may further include part or all of the configuration information of the LP-SS.

In a variation, the operation s503 may be performed before/after/simultaneously with the operation s501 and/or the operation s502.

Further, the carrier of the indication information may vary, and the recipient may also be different. For example, it is possible to transmit the indication information to the terminal 51 via SIB, and correspondingly, the main communication receiver may receive the SIB and forward the indication information to the LP-WUR 511.

In a variation, the transmission of the SMTC in the operation s506 may be performed continuously. For example, the base station 52 may continuously and periodically transmit LP-SSs and SMTCs, enabling the terminal 51 to receive one of signals as needed to perform RRM measurement(s).

An embodiment of the present invention further provides a computer-readable storage medium, which is a non-volatile storage medium or a non-transitory storage medium. A computer program is stored on the computer-readable storage medium. When the computer program is executed by a processor, the steps of the measurement method for a terminal provided in the embodiments illustrated in FIG. 1 to FIG. 3 above or the steps of the communication method for measurement at a terminal provided in the embodiment illustrated in FIG. 5 above are executed. Preferably, the storage medium may include a computer-readable storage medium such as a non-volatile (non-volatile) memory or a non-transitory (non-transitory) memory, etc. The storage medium may include a ROM, a RAM, a magnetic disk or an optical disk, etc.

An embodiment of the present invention further provides another measurement apparatus for a terminal. The apparatus includes a memory and a processor. The memory stores thereon a computer program that can run on the processor. When the computer program runs on the processor, the steps of the measurement method for a terminal provided in the corresponding embodiments of FIG. 1 to FIG. 3 are executed. The measurement apparatus for a terminal may be integrated in the terminal, or the measurement apparatus for a terminal may be, e.g., the terminal.

An embodiment of the present invention further provides another communication apparatus for measurement at a terminal. The apparatus includes a memory and a processor. The memory stores thereon a computer program that can run on the processor. When the computer program runs on the processor, the steps of the communication method for measurement at a terminal provided in the corresponding embodiment of FIG. 5 above are executed. The communication apparatus for measurement at a terminal may be integrated in a network device, or the communication apparatus for measurement at a terminal may be, e.g., a network device such as a base station.

Although the present invention is disclosed as above, the present invention is not limited thereto. Any person skilled in the art may make various changes and modifications without departing from the spirit and scope of the present invention. Therefore, the protection scope of the present invention shall be based on the scope defined by the claims.

## Claims

1. A method for terminal measurement, wherein the terminal comprises a first receiver and a second receiver, and the first receiver is configured to receive a low-power wake-up signal; wherein the method comprises:
receiving first information, wherein the first information is at least used to indicate configuration information of a first reference signal;
receiving the first reference signal through the first receiver, to perform RRM measurement.

2. The method according to claim 1, wherein the first information comprises configuration information of a second reference signal, wherein the configuration information of the first reference signal is determined at least based on the configuration information of the second reference signal, and the second reference signal is received by the second receiver.

3. The method according to claim 2, wherein configuration of at least part of parameters in the configuration information of the first reference signal remains consistent with configuration of a parameter corresponding to the at least part of parameters in the configuration information of the second reference signal.

4. The method according to claim 3, wherein for a first parameter that is inconsistently configured between the configuration information of the first reference signal and the configuration information of the second reference signal, determining, based on a preset offset value, an offset of a value of the first parameter in the configuration information of the first reference signal relative to a value of the first parameter in the configuration information of the second reference signal.

5. The method according to claim 2 or 3, wherein the first information further comprises an offset value, and the offset value is used to indicate an offset of a value of a first parameter in the configuration information of the first reference signal relative to a value of the first parameter in the configuration information of the second reference signal.

6. The method according to claim 5, wherein the first parameter comprises a starting time position.

7. The method according to claim 5, wherein the determination of the configuration information of the first reference signal at least based on the configuration information of the second reference signal comprises: determining the configuration information of the first reference signal based on the configuration information of the second reference signal and the offset value.

8. The method according to claim 1, wherein the first information comprises the configuration information of the first reference signal and configuration information of a second reference signal, wherein the second reference signal is received by the second receiver.

9. The method according to claim 1, wherein at least during a reception period of the first reference signal by the first receiver, the second receiver is in a non-operating state.

10. The method according to claim 1, wherein the configuration information of the first reference signal is at least selected from: a time-frequency resource location of the first reference signal, a period of the first reference signal, a starting time position of the first reference signal, a period of a reception window of the first reference signal, a starting position of the reception window of the first reference signal, and a length of the reception window of the first reference signal.

11. The method according to claim 1, wherein the first information comprises SMTC.

12. The method according to claim 1, further comprising:
receiving indication information, wherein the indication information is used to indicate whether the RRM measurement through the first receiver is permitted or not.

13. The method according to claim 12, wherein the indication information is carried by system information, and the system information is received by the second receiver; or the indication information is carried by the low-power wake-up signal.

14. The method according to claim 1, further comprising:
if signal quality of a serving cell is less than a first preset threshold, waking up the second receiver to perform serving cell measurement, wherein the signal quality of the serving cell is obtained by measuring the first reference signal through the first receiver.

15. The method according to claim 1, further comprising:
if signal quality of a serving cell is less than a second preset threshold, waking up the second receiver to perform neighbor cell measurement, wherein the signal quality of the serving cell is obtained by measuring the first reference signal through the first receiver.

16. A measurement apparatus for a terminal, wherein the terminal comprises a first receiver and a second receiver, and the first receiver is configured to receive a low-power wake-up signal; wherein the apparatus comprises:
a first receiving module, configured to receive first information, wherein the first information is at least used to indicate configuration information of a first reference signal;
a second receiving module, configured to receive the first reference signal through the first receiver, to perform RRM measurement.

17. A communication method for measurement at a terminal, wherein the terminal comprises a first receiver and a second receiver, and the first receiver is configured to receive a low-power wake-up signal; wherein the method comprises:
transmitting first information, wherein the first information is at least used to indicate configuration information of a first reference signal, and the first reference signal is received by the first receiver to perform RRM measurement;
transmitting the first reference signal.

18. The method according to claim 17, wherein the first information comprises configuration information of a second reference signal, wherein the configuration information of the first reference signal is determined at least based on the configuration information of the second reference signal, and the second reference signal is received by the second receiver.

19. The method according to claim 18, wherein configuration of at least part of parameters in the configuration information of the first reference signal remains consistent with configuration of a parameter corresponding to the at least part of parameters in the configuration information of the second reference signal.

20. The method according to claim 19, wherein for a first parameter that is inconsistently configured between the configuration information of the first reference signal and the configuration information of the second reference signal, determining, based on a preset offset value, an offset of a value of the first parameter in the configuration information of the first reference signal relative to a value of the first parameter in the configuration information of the second reference signal.

21. The method according to claim 18 or 19, wherein the first information further comprises an offset value, and the offset value is used to indicate an offset of a value of a first parameter in the configuration information of the first reference signal relative to a value of the first parameter in the configuration information of the second reference signal.

22. The method according to claim 21, wherein the first parameter comprises a starting time position.

23. The method according to claim 21, wherein the determination of the configuration information of the first reference signal at least based on the configuration information of the second reference signal comprises: determining the configuration information of the first reference signal based on the configuration information of the second reference signal and the offset value.

24. The method according to claim 17, wherein the first information comprises the configuration information of the first reference signal and configuration information of a second reference signal, wherein the second reference signal is received by the second receiver.

25. The method according to claim 17, wherein the configuration information of the first reference signal is at least selected from: the configuration information of the first reference signal is at least selected from: a time-frequency resource location of the first reference signal, a period of the first reference signal, a starting time position of the first reference signal, a period of a reception window of the first reference signal, a starting position of the reception window of the first reference signal, and a length of the reception window of the first reference signal.

26. The method according to claim 17, wherein the first information comprises SMTC.

27. The method according to claim 17, further comprising:
transmitting indication information, wherein the indication information is used to indicate whether the RRM measurement through the first receiver is permitted or not.

28. The method according to 27, wherein the indication information is carried by system information, and the system information is received by the second receiver; or the indication information is carried by the low-power wake-up signal.

29. The method according to claim 17, further comprising:
transmitting a second reference signal, and wherein the second receiver is awakened based on an RRM measurement result from the first receiver to receive the second reference signal.

30. A communication apparatus for measurement at a terminal, wherein the terminal comprises a first receiver and a second receiver, and the first receiver is configured to receive a low-power wake-up signal; wherein the apparatus comprises:
a first transmitting module, configured to transmit first information, wherein the first information is at least used to indicate configuration information of a first reference signal, and the first reference signal is received by the first receiver to perform RRM measurement;
a second transmitting module, configured to transmit the first reference signal.

31. A computer-readable storage medium, wherein the computer-readable storage medium is a non-volatile storage medium or a non-transitory storage medium with a computer program stored thereon, when the computer program is executed by a processor, steps of the method according to any one of claims 1 to 15 or steps of the method according to any one of claims 17 to 29 are executed.

32. A measurement apparatus for a terminal, comprising a memory and a processor, wherein the memory stores thereon a computer program executable on the processor, when the computer program runs on the processor, steps of the method according to any one of claims 1 to 15 are executed.

33. A communication apparatus for measurement at a terminal, comprising a memory and a processor, wherein the memory stores thereon a computer program executable on the processor, when the computer program runs on the processor, steps of the method according to any one of claims 17 to 29 are executed.
